# EUROPEAN PATENT SPECIFICATION

(11) **EP 3 347 292 B1**
(45) Date of publication and mention of the grant of the patent: **17.07.2024**
(21) Application number: 16777806.7
(22) Date of filing: 08.09.2016
(51) Int. Cl.: B65G 17/30, B65G 17/40, B65G 47/96

(54) **SLIDING SHOE FOR A HOLDER IN A SORTING DEVICE FOR PRODUCTS SUCH AS VEGETABLES AND FRUIT, HOLDER AND SORTING DEVICE PROVIDED THEREWITH, AND METHOD THEREFOR**
GLEITSCHUH FÜR EINE HALTERUNG IN EINER SORTIERVORRICHTUNG FÜR PRODUKTE WIE GEMÜSE UND OBST, HALTERUNG UND SORTIERVORRICHTUNG DAMIT SOWIE VERFAHREN DAFÜR
PATIN COULISSANT POUR SUPPORT DANS UN DISPOSITIF DE TRI DE PRODUITS TELS QUE DES FRUITS ET LÉGUMES, SUPPORT ET DISPOSITIF DE TRI DOTÉS DE CELUI-CI ET PROCÉDÉ ASSOCIÉ

(30) Priority: 09.09.2015 NL 2015418
(43) Date of publication of application: 18.07.2018
(73) Proprietor: De Greef's Wagen-, Carrosserie- en Machinebouw B.V., 4196 JB Tricht (NL)
(72) Inventor: NIJLAND, Wilhelm Jan, 3903 GN Veenendaal (NL)
(74) Representative: Verdijck, Gerardus
(86) International application number: PCT/NL2016/050624
(87) International publication number: WO 2017/043970

(56) References cited:
- EP-A1- 0 790 196
- WO-A1-2011/005083
- WO-A1-2013/128408
- AU-A1- 2007 201 137
- DE-U1- 202012 100 777
- JP-U- H0 540 642
- NL-C2- 1 016 453
- US-A- 3 944 059
- US-A- 5 586 644
- US-B1- 7 360 644
- US-B2- 6 854 397

## Description

The present invention relates to a sliding shoe for a holder or cup whereby products, such as vegetables and fruit, are displaced in a sorting device.

US 3,944,059 discloses an endless chain conveyor with a number of wear pads.

Sorting devices for sorting vulnerable products, particularly vegetables and fruit such as apples and pears, are known in practice. An example of such a sorting device is described in NL 2003166. This describes in particular a holder for transport of such products in a sorting device. Such a holder is provided with a product carrier movable in transport direction for receiving the product for transporting. The holder is further provided with a rotation shaft or tilting shaft for discharging the product at the correct sorting outlet of the sorting device, wherein a flexible member is provided for discharging the product in controlled manner. Such a holder for transporting products in a sorting device is further described in NL 1016453. Furthermore, WO2013128408 A1 discloses a sliding shoe according to the preamble of claim 1.

The sorting devices known in practice comprise an endless row of holders. These holders are also referred to as cups. While the (empty) holders are being carried back in the sorting device the holders are as it were upside down. A guide is usually provided in the sorting device for this purpose for supporting holders which are in an inverse position. Wear of and/or damage to the holders is in practice found to occur here after a period of time. Replacing such holders is relatively labour-intensive.

The object of the present invention is to provide a solution for preventing damage and/or reducing the effort required in repair and maintenance of a sorting device, and particularly the holders thereof.

The present invention provides for this purpose a sliding shoe for a holder according to claim 1.
The sliding shoe according to the invention is particularly configured for use in sorting devices and sorting systems of preferably fresh products such as potato, vegetable and fruit products, and particularly apples and pears. In such a sorting device products are usually supplied via a feed system with a feed conveyor and singulated using a singulator, such that these products can preferably be measured and classified. Products are then carried by the holder to the desired sorting outlet of the sorting device, and discharged there, on the basis of the class allocation. This discharging is preferably done by tilting of the product carrier of the holder at the position of the desired sorting outlet. This is described inter alia in NL 1016453.

The holders are transported in the sorting device with a peripheral or endless transport system. The holder can be provided with a single product carrier. In a currently preferred embodiment each holder is provided with two product carriers on either side of a preferably centrally positioned drive, for instance an endless chain. During transport of the product the carrier rests directly or indirectly on such a chain and guide. While the holder is being carried back, i.e. counter to the transport direction of the products on the sorting device, the holders are directed in inverse orientation. The holder then rests with the upper side, directed downward at that moment, on a guide and moves over or along this guide.

According to the invention, a sliding shoe as stated in claim 1 is provided. According to the invention, a sliding shoe with one or more sliding surfaces, for instance one, two, four or a different number, is arranged on the upper side, i.e. on the product side of the holder. In the case of a single sliding surface, this surface can for instance be provided centrally. In the case of more sliding surfaces, these surfaces can for instance be provided distributed over the surface of the sliding shoe.

In a currently preferred embodiment two sliding surfaces are provided, wherein a first sliding surface is provided on or close to the front side, as seen in the usual transport direction of the products in the sorting device, and a second sliding surface is provided on or close to the rear side, as seen in the usual transport direction of the products in the sorting device. These sliding surfaces absorb the relative movement between the holder and the guide during the backwards movement of the holder in the sorting device, i.e. counter to the usual transport direction of the products on the sorting device. Wear and/or damage is in this way accumulated on or at the sliding surfaces.

By providing the sliding shoe according to the invention with a fastening configured to fasten the sliding shoe releasably to the holder the sliding shoe functions as replacement part. Such a releasable fastening can be provided in diverse ways, for instance using a screw connection, snap connection, tensioning connection and the like. Because damage accumulates on or at the sliding surfaces of the sliding shoe, the sliding shoe has to replaced first during use. Because of the releasable fastening of the sliding shoe it is possible during such a replacement to forgo detaching the whole holder, so that dismounting and re-mounting of holders on the sorting device is avoided. This results in a considerable saving in labour costs and possibly in parts of the holder. By uncoupling the releasable connection the sliding shoe can be removed from the holder and can be replaced in simple manner as soon as it no longer suffices. It is hereby for instance not necessary to replace the whole cup bed, i.e. the collection of holders in the sorting device. Using the sliding shoe as replacement part, the modification takes place considerably more quickly and cheaply. This results in a significant reduction of maintenance costs. The stationary period for maintenance operations on the sorting device is in addition considerably reduced. The sorting device can hereby be utilized more effectively, and the total sorting process can be performed more efficiently.

The fastening comprises a number of snap connections for realizing an easily releasable connection thereby. The sliding shoe according to the invention can preferably be pressed onto the holder, and if desired be removed therefrom again, in simple manner with such snap connections.

In a currently preferred embodiment the snap connection comprises a resilient tongue. Such a resilient tongue or edge, also referred to as snap hook, can be pressed in simple manner over an edge or protrusion on the holder co-acting therewith. The resilient tongue of the snap connection is preferably arranged on the sliding shoe. The sliding shoe is hereby imparted with the greatest possible flexibility. Possible damage to such a resilient tongue can be prevented in simple manner by exchanging the sliding shoe. A resilient element can alternatively or additionally also be provided on the holder, and the sliding shoe can if desired be provided with a rigid part.

A first part of the snap connections is provided on the front side of a sliding shoe, as seen in transport direction of the products in the sorting device, and a second part of the snap connections is provided on or close to a rear side of the sliding shoe, as seen in usual transport direction of the products in the sorting device. These snap connections on the front and rear side are configured such that during use they fall between snap connections on respectively the rear side or front side of adjacent sliding shoes arranged on the sorting device. Successive sliding shoes, which are arranged very close together on the sorting device, hereby fit into each other and will not come into mutual contact during normal use. A high processing capacity of the sorting device can hereby be provided.

A third part of the snap connections, for instance in the form of two or more snap hooks, is further preferably provided under a central part of the sliding shoe, such that a sliding shoe according to the invention can be fastened to the holder in robust manner. Elements co-acting with this third part of the snap connections are arranged for this purpose in or on the holder, such as an edge or protrusion.

According to the present invention the sliding shoe is provided from a plastic material in which is included a lubricating additive configured to provide a lubricating effect during movement of the sliding shoe over a guide of the sorting device.
Providing the sliding shoe from a plastic material enables a cost-effective production of the sliding shoe. This results in a cost-effective product. An additional advantage is that additives can be included herein in relatively simple manner in order to improve lubrication. Examples of a plastic material are relatively hard types of plastic, such as polyamide or polyoxymethylene. Other examples of the plastic material used are polyethylene, such as HDPE and HMPE. If use is advantageously made of a plastic guide, for instance of HDPE or HMPE, in the sorting device, the plastic sliding shoe will slide over the plastic guide in such a currently preferred embodiment. Harder plastics such as polyamide preferably move over a softer plastic, while softer plastics preferably move over a metal guide.

It has been found that the occurring wear can be significantly reduced by adding a lubricating additive to the plastic material. The amount of friction can hereby additionally also be reduced in advantageous manner, so that the movement can be performed more efficiently and with less energy, and wear is further reduced. In addition, it is not required to provide a separate lubrication, whereby the sorting device can be operated more cleanly. This is particularly advantageous if food products are transported and/or sorted with the sorting device.

In an advantageous preferred embodiment according to the present invention the sliding shoe comprises a wear indicator.

Providing a wear indicator makes it possible to determine in effective manner whether maintenance and/or replacement is necessary, particularly of the sliding shoe according to the invention. In a possible embodiment according to the invention the indicator is provided as an element or layer on or close to a sliding surface of the sliding shoe, so that this element or layer will be affected over time, and is optionally even removed from the sliding shoe, as a result of wear. The sliding shoe can be replaced at that moment.

In a further advantageous preferred embodiment according to the present invention the sliding shoe comprises a recess configured for arranging therein the tool for removing the sliding shoe from the holder.

By providing a recess in the sliding shoe a tool can be inserted therein in effective manner and push or press the sliding shoe from the holder from the underside of the sliding shoe. Such a tool is for instance a screwdriver or rod. The sliding shoe can hereby be removed from the holder with a simple movement, and no special tools are required. This means that, if replacement is necessary or desired, it is also possible for a user of the sorting device to replace the sliding shoe him/herself, and a specialized technician need not be brought in. Maintenance is hereby simplified further, costs reduced further, and stationary periods for maintenance can be reduced.

The location of the recesses preferably largely corresponds to the location of the spray nozzle during production of the sliding shoe by means of injection moulding. This is particularly advantageous since the location of the spray nozzle usually provides a small variation in the produced product. By providing the recess at this location, finishing of the sliding shoe can be reduced or even be avoided, and/or it is avoided that an insufficiently flat location is created and that the sliding shoe may not connect fully to the holder as a result thereof. The fastening of the sliding shoe on the holder is hereby further improved.

In a further advantageous preferred embodiment according to the present invention the sliding shoe comprises a transport indicator for indicating the usual transport direction of the products in the sorting device.

By arranging a transport indicator on the sliding shoe the orientation of the sliding shoe for mounting is easily visible. This makes mounting even simpler. This is particularly advantageous if snap connections, which are adapted to the location of snap connections on adjacent sliding shoes, are provided on the front and rear side, so that the sliding shoes can be provided at a short mutual distance from each other without this resulting in contact during normal use. A reliable sorting device is hereby provided.

The invention further relates to a holder as defined in claim 9, for transporting products in a sorting device and/or such a sorting device as defined in claim 11, provided with a number of such holders, wherein the holder is provided with a sliding shoe as described above.

Such a holder and/or sorting device provides the same advantages and effects as already described for the sliding shoe.

In an advantageous preferred embodiment the sorting device according to the invention is further provided with a plastic guide for carrying back the holders counter to the usual direction of the products in the sorting device. A more effective transport of holders in the sorting device is hereby provided.

The invention further also relates to a method for reducing wear and/or maintenance to a sorting device for sorting and/or transporting products, as defined in claim 13, wherein the method comprises the steps of:
- providing a sorting device and a number of holders;
- arranging a number of holders in the sorting device, wherein the holders are configured to carry products; and
- rclcasably arranging a sliding shoe as described above on the holders.

Such a method provides the same advantages and effects as already described above for the sliding shoe and/or holder and/or sorting device.

Further advantages, features and details of the invention are further elucidated below on the basis of preferred embodiments thereof, wherein reference is made to the accompanying drawings, in which:
- Figure 1 shows a view of a sorting device with the sliding shoe according to the invention;
- Figure 2 shows a view of a number of holders with sliding shoe according to the invention in both transport directions;
- Figure 3 shows a view of a holder with sliding shoe in the backwards or return direction;
- Figure 4 shows a view of a holder with sliding shoe; and
- Figure 5 shows a further view of the sliding shoe of Figure 4.

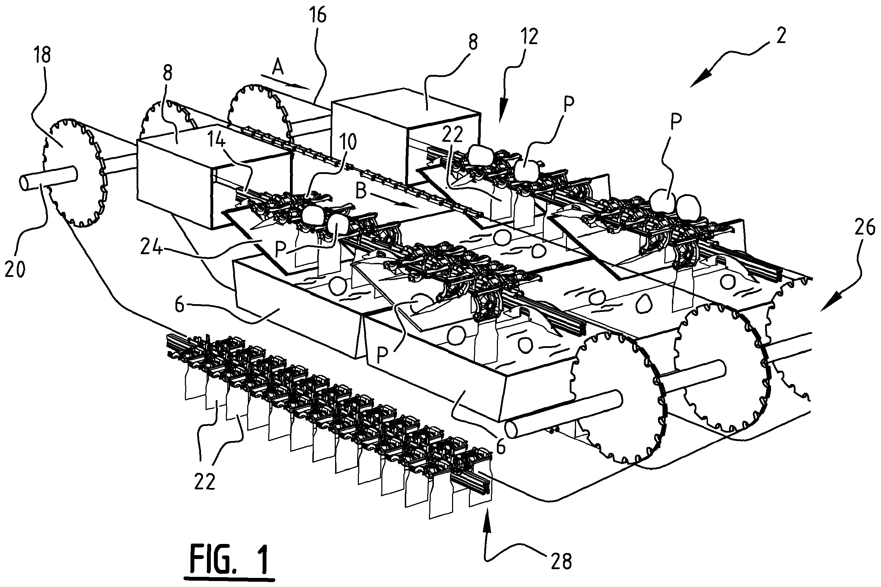

Sorting device 2 (figure 1) is provided with a feed side 4 and a number of sorting channels 6. Products P are placed on the cups/product carriers 10 of a holder 12 using the schematically designated measuring and classification system 8. In the shown embodiment each holder or holder frame 12 is provided with two product carriers on either side of guide or rail 14. Transport of holders 12 in sorting device 2 is schematically designated with a chain 16 which rotates in direction A. Use can be made here of a number of toothed wheels 18 which are mounted on a rotation shaft 20 which can be driven. In the shown embodiment holders 12 are provided with flaps 22 whereby product P can be discharged safely, optionally in co-action with guides 24 in the desired sorting outlet 6. Sorting outlet 6 is for instance formed by a water channel.

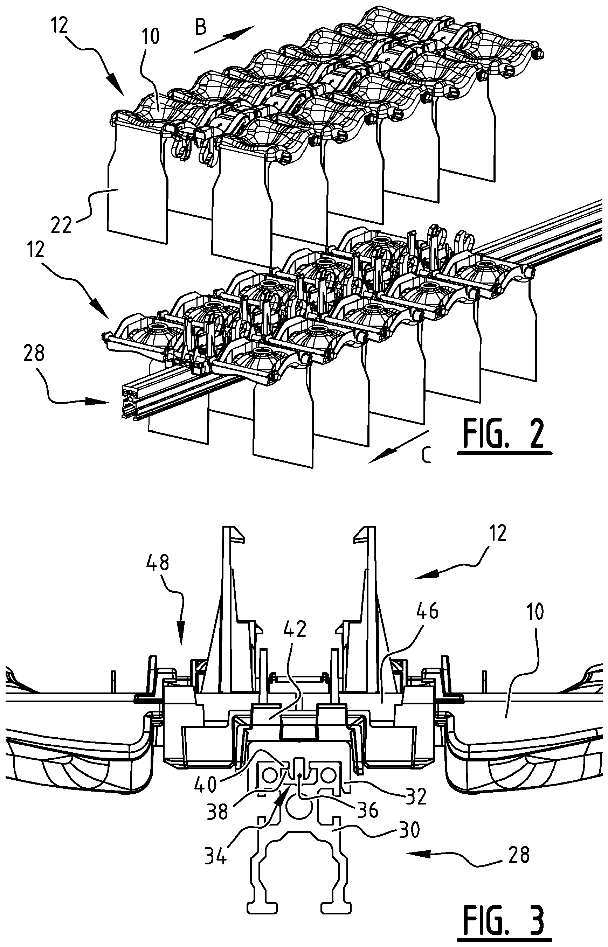

In sorting device 2 products P are moved in transport direction B (figure 2). Chain 16 as it were turns over at end 26 (figure 1) of sorting device 2, so that holders 12 as it were return.

In backwards or return direction C (figure 2) holders 12 rest on guide 28. Return direction C is here opposite to the usual transport direction of products P on sorting device 2 in direction B.

In the shown embodiment guide 28 is provided in two parts, for instance an extruded profile 30 and a plastic cover layer 32 (figure 3), which is preferably placed into recess 36 of base guide 30 using snap connection 34. In the shown embodiment hook 38 of cover layer 32 falls behind edge 40 of base guide 30 after mounting. Sliding shoe 42, with which holder 12 rests on cover layer 32 of guide 28, is further mounted on holder 12.

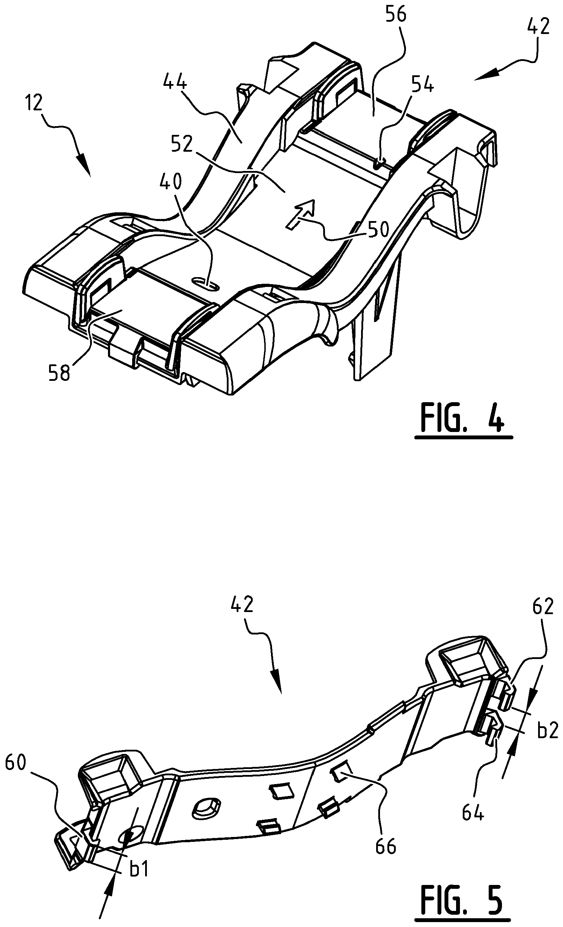

Holder or holder frame 12 comprises a base frame 44 on which sliding shoe 42 can be arranged (figure 4). In the shown embodiment holder 12 is provided with a shaft 46, wherein a cup 10 is arranged on either side of guide 28. Tilting mechanism 48 provides for the releasing of cups 10 and thereby the discharging of products P at desired sorting outlet 6.

Indicator 50 for indicating the transport direction of holder or holder frame 12 is arranged at or on central part 52 and directed upward as seen in transport direction B of products P on sorting device 2. A wear indicator 54 is also arranged close to a first sliding surface 56. Sliding surface 56 is arranged at or close to the front side of sliding shoe 42, as seen in usual transport direction B. A second sliding surface 58 is arranged at or close to the other outer end of sliding shoe 42, i.e. at or close to the rear side, as seen in the usual transport direction B of products in sorting device 2. Further provided is recess 40 into which a tool, for instance a screwdriver, can be inserted for the purpose of pushing or pressing sliding shoe 42 up from base frame 44 of holder 12.

Situated on the rear side of sliding shoe 42 in the shown embodiment is a single snap hook or snap element 60 with a width b1 (figure 5). Situated on the front side are two snap hooks 62, 64 with an intermediate space b2 in which snap hook 60 of an adjacent sliding shoe 42 can move. Situated on the underside of sliding shoe 42 in the shown embodiment are four additional snap hooks 66 which enable a further robust fastening of sliding shoe 42 to or on holder 12.

For mounting sliding shoe 42 on base frame 44 of holder or holder frame 12, sliding shoe 42 can be snapped thereon in simple manner. Snap hooks 60, 62, 64, 66 then fall over corresponding edges or elements of holder or holder frame 12. If sliding shoe 42 has to be removed for replacement or maintenance, sliding shoe 42 can be moved from base frame 44 of holder 12 using a tool which is inserted into recess 40, and can be detached thereby. A new or repaired sliding shoe 42 can then be re-placed by pressing this shoe onto base frame 44 of holder 12 again.

The present invention is by no means limited to the above described preferred embodiments thereof. The rights sought are defined by the following claims, within the scope of which many modifications can be envisaged.

## Claims

1. Sliding shoe (42) for a holder (12) configured to sort and/or transport products (P) with a sorting device (2), the sliding shoe (42) comprising:
- a fastening (66) wherein the fastening comprises a number of snap connections (66), and
- one or more sliding surfaces (56,58) to guide the holder over a guide (28) of the sorting device while the holder is being carried back in a sorting device, wherein a first part (62,64) of the snap connections on a front side of the sliding shoe, as seen in transport direction (B) of the products in the sorting device, and a second part (60) of the snap connections on the rear side of the sliding shoe, as seen in transport direction (B) of the products in the sorting device, are configured such that during use they fall between snap connections on respectively the rear side and front side of adjacent sliding shoes arranged on the sorting device, **characterized in that**
the sliding shoe is manufactured from a plastic material in which is included a lubricating additive configured to provide a lubricating effect during movement of the sliding shoe (42) over a guide (28) of the sorting device (2), and wherein the fastening is configured to fasten the sliding shoe releasably to the holder such that the sliding shoe functions as replacement part for the holder.

2. Sliding shoe as claimed in claim 1, wherein a first sliding surface (56) is provided on or close to the front side, as seen in usual transport direction of the products in the sorting device, and a second sliding surface (58) is provided on or close to the rear side, as seen in usual transport direction of the products in the sorting device.

3. Sliding shoe as claimed in claim 1 or 2, wherein the snap connection (34) comprises a resilient tongue.

4. Sliding shoe as claimed in claim 1, 2 or 3, wherein a third part (66) of the snap connections is arranged on a central part of the sliding shoe.

5. Sliding shoe as claimed in one or more of the foregoing claims, further comprising a wear indicator (54).

6. Sliding shoe as claimed in one or more of the foregoing claims, further comprising a recess (40) configured for arranging therein a tool for removing the sliding shoe from the holder.

7. Sliding shoe as claimed in claim 6, wherein the location of the recess largely corresponds to the location of a small variation in the sliding shoe provided by the spray nozzle during injection mould production of the sliding shoe.

8. Sliding shoe as claimed in one or more of the foregoing claims, further comprising a transport indicator (50) for indicating the usual transport direction of the products in the sorting device and orientation of the sliding shoe for mounting.

9. Holder (12) for transporting products (P) in a sorting device (2), provided with a sliding shoe (42) as claimed in one or more of the foregoing claims, wherein the holder is provided with fastening elements (66) for fastening the sliding shoe.

10. Holder as claimed in claim 9, further comprising two product carriers on either side of guide or rail (14), wherein the sliding shoe rests on the guide or rail (28) in backward or return direction (C).

11. Sorting device (2) provided with a number of holders (12) as claimed in claim 9 or 10.

12. Sorting device as claimed in claim 11, further provided with a plastic guide (28) for carrying back the holders.

13. Method for reducing wear and/or maintenance to a sorting device (2) for sorting and/or transporting products (P), comprising the steps of
- providing a sorting device (2) and a number of holders (12);
- arranging a number of holders (12) in the sorting device, wherein the holders are configured to carry the products (P); and
- releasably arranging a sliding shoe (42) as claimed in one or more of the claims 1-8 on the holders.

## Patentansprüche

1. Gleitschuh (42) für einen Halter (12), der konfiguriert ist, um Produkte (P) mit einer Sortiervorrichtung (2) zu sortieren und/oder zu transportieren, der Gleitschuh (42) umfassend:
- eine Befestigung (66), wobei die Befestigung eine Anzahl von Schnappverbindungen (66) umfasst, und
- eine oder mehrere Gleitoberflächen (56,58), um den Halter über eine Führung (28) der Sortiervorrichtung zu führen, während der Halter in einer Sortiervorrichtung zurückgeführt wird, wobei ein erster Teil (62,64) der Schnappverbindungen auf einer Vorderseite des Gleitschuhs, wie gesehen in Transportrichtung (B) der Produkte in der Sortiervorrichtung, und ein zweiter Teil (60) der Schnappverbindungen auf der Rückseite des Gleitschuhs, wie gesehen in Transportrichtung (B) der Produkte in der Sortiervorrichtung, derart konfiguriert sind, dass sie während einer Verwendung zwischen Schnappverbindungen auf der Rückseite bzw. der Vorderseite angrenzender Gleitschuhe fallen, die auf der Sortiervorrichtung angeordnet sind, **dadurch gekennzeichnet, dass** der Gleitschuh aus einem Kunststoffmaterial hergestellt ist, in dem ein Schmierzusatz enthalten ist, der konfiguriert ist, um während einer Bewegung des Gleitschuhs (42) über eine Führung (28) der Sortiervorrichtung (2) eine Schmierwirkung bereitzustellen, und wobei die Befestigung konfiguriert ist, um den Gleitschuh an dem Halter derart lösbar zu befestigen, dass der Gleitschuh als ein Ersatzteil für den Halter funktioniert.

2. Gleitschuh nach Anspruch 1, wobei eine erste Gleitoberfläche (56) auf oder nahe der Vorderseite, wie gesehen in üblicher Transportrichtung der Produkte in der Sortiervorrichtung, bereitgestellt ist und eine zweite Gleitoberfläche (58) auf oder nahe der Rückseite, wie gesehen in üblicher Transportrichtung der Produkte in der Sortiervorrichtung, bereitgestellt ist.

3. Gleitschuh nach Anspruch 1 oder 2, wobei die Schnappverbindung (34) eine elastische Zunge aufweist.

4. Gleitschuh nach Anspruch 1, 2 oder 3, wobei ein dritter Teil (66) der Schnappverbindungen an einem Mittelteil des Gleitschuhs angeordnet ist.

5. Gleitschuh nach einem oder mehreren der vorstehenden Ansprüche, ferner umfassend einen Verschleißindikator (54).

6. Gleitschuh nach einem oder mehreren der vorstehenden Ansprüche, ferner umfassend eine Aussparung (40), die konfiguriert ist, darin ein Werkzeug zum Entfernen des Gleitschuhs von der Halterung anzuordnen.

7. Gleitschuh nach Anspruch 6, wobei die Position der Aussparung weitgehend der Position einer kleinen Abweichung in dem Gleitschuh entspricht, die durch die Spritzdüse während einer Spritzgießherstellung des Gleitschuhs bereitgestellt wird.

8. Gleitschuh nach einem oder mehreren der vorstehenden Ansprüche, ferner umfassend einen Transportindikator (50) zum Anzeigen der üblichen Transportrichtung der Produkte in der Sortiervorrichtung und der Ausrichtung des Gleitschuhs zum Montieren.

9. Halter (12) zum Transportieren von Produkten (P) in einer Sortiervorrichtung (2), versehen mit einem Gleitschuh (42) gemäß einem oder mehreren der vorstehenden Ansprüche, wobei der Halter mit Befestigungselementen (66) zum Befestigen des Gleitschuhs versehen ist.

10. Halter nach Anspruch 9, ferner umfassend zwei Produktträger auf beiden Seiten der Führung oder Schiene (14), wobei der Gleitschuh in Rückwärts- oder Rückkehrrichtung (C) auf der Führung oder Schiene (28) ruht.

11. Sortiervorrichtung (2), die mit einer Anzahl von Haltern (12) nach Anspruch 9 oder 10 versehen ist.

12. Sortiervorrichtung nach Anspruch 11, die ferner mit einer Kunststoffführung (28) zum Zurücktragen der Halter versehen ist.

13. Verfahren zum Reduzieren von Verschleiß und/oder Wartung einer Sortiervorrichtung (2) zum Sortieren und/oder Transportieren von Produkten (P), umfassend die Schritte:
- Bereitstellen einer Sortiervorrichtung (2) und einer Anzahl von Haltern (12);
- Anordnen einer Anzahl von Haltern (12) in der Sortiervorrichtung, wobei die Halter konfiguriert sind, um die Produkte (P) zu tragen; und
- lösbares Anordnen eines Gleitschuhs (42) nach einem oder mehreren der Ansprüche 1 bis 8 an den Haltern.

## Revendications

1. Mâchoire à bride (42) pour un support (12) conçue pour trier et/ou transporter des produits (P) avec un dispositif de tri (2), la mâchoire à bride (42) comprenant :
- une fixation (66) dans laquelle la fixation comprend un certain nombre de raccords à pression (66), et
- une ou plusieurs surfaces de glissement (56,58) pour guider le support sur un guide (28) du dispositif de tri lorsque le support est ramené dans un dispositif de tri, dans laquelle une première partie (62,64) des raccords à pression sur un côté avant de la mâchoire à bride, comme vu dans la direction de transport (B) des produits dans le dispositif de tri, et une deuxième partie (60) des raccords à pression sur le côté arrière de la mâchoire à bride, comme vu dans la direction de transport (B) des produits dans le dispositif de tri, sont conçues de telle sorte que, pendant l'utilisation, elles tombent entre les raccords à pression sur respectivement le côté arrière et le côté avant des mâchoires à bride adjacentes disposées sur le dispositif de tri, **caractérisée en ce que** la mâchoire à bride est fabriquée à partir d'un matériau plastique dans lequel est inclus un additif lubrifiant conçu pour fournir un effet lubrifiant pendant le mouvement de la mâchoire à bride (42) sur un guide (28) du dispositif de tri (2), et dans laquelle la fixation est conçue pour fixer la mâchoire à bride de manière amovible par rapport au support de telle sorte que la mâchoire à bride fonctionne comme une pièce de rechange pour le support.

2. Mâchoire à bride selon la revendication 1, dans laquelle une première surface de glissement (56) est prévue sur ou à proximité du côté avant, comme vu dans la direction de transport habituelle des produits dans le dispositif de tri, et une seconde surface de glissement (58) est prévue sur ou à proximité du côté arrière, comme vu dans la direction de transport habituelle des produits dans le dispositif de tri.

3. Mâchoire à bride selon la revendication 1 ou 2, dans laquelle le raccord à pression (34) comprend une languette élastique.

4. Mâchoire à bride selon la revendication 1, 2 ou 3, dans laquelle une troisième partie (66) des raccords à pression est disposée sur une partie centrale de la mâchoire à bride.

5. Mâchoire à bride selon l'une ou plusieurs des revendications précédentes, comprenant en outre un indicateur d'usure (54).

6. Mâchoire à bride selon l'une ou plusieurs des revendications précédentes, comprenant en outre un renfoncement (40) conçu pour y loger un outil permettant de retirer la mâchoire à bride du support.

7. Mâchoire à bride selon la revendication 6, dans laquelle l'emplacement du renfoncement correspond en grande partie à l'emplacement d'une petite variation de la mâchoire à bride produite par la buse de pulvérisation pendant la production du moule d'injection de la mâchoire à bride.

8. Mâchoire à bride selon l'une ou plusieurs des revendications précédentes, comprenant en outre un indicateur de transport (50) pour indiquer la direction habituelle de transport des produits dans le dispositif de tri et l'orientation de la mâchoire à bride pour le montage.

9. Support (12) pour le transport de produits (P) dans un dispositif de tri (2), muni d'une mâchoire à bride (42) selon l'une ou plusieurs des revendications précédentes, dans lequel le support est pourvu d'éléments de fixation (66) pour fixer la mâchoire à bride.

10. Support selon la revendication 9, comprenant en outre deux supports de produits de part et d'autre du guide ou du rail (14), dans lequel la mâchoire à bride repose sur le guide ou le rail (28) dans la direction de recul ou de retour (C).

11. Dispositif de tri (2) pourvu d'un certain nombre de supports (12) selon la revendication 9 ou 10.

12. Dispositif de tri selon la revendication 11, pourvu en outre d'un guide en plastique (28) pour ramener les supports.

13. Procédé de réduction de l'usure et/ou de l'entretien d'un dispositif de tri (2) pour le tri et/ou le transport de produits (P), comprenant les étapes consistant à :
- fournir un dispositif de tri (2) et un certain nombre de supports (12) ;
- disposer un certain nombre de supports (12) dans le dispositif de tri, dans lequel les supports sont conçus pour transporter les produits (P) ; et
- disposer de manière amovible sur les supports une mâchoire à bride (42) selon l'une ou plusieurs des revendications 1 à 8.
